# EUROPÄISCHE PATENTSCHRIFT

(11) **EP 3 959 798 B1**
(45) Veröffentlichungstag und Bekanntmachung des Hinweises auf die Patenterteilung: **05.06.2024**
(21) Anmeldenummer: 20716457.5
(22) Anmeldetag: 01.04.2020
(51) Int. Cl.: H02K 5/20, H02K 9/19, F16J 15/06, F16J 15/10

(54) **GEHÄUSE EINER ELEKTRISCHEN MASCHINE MIT OPTIMIERTEM DICHTUNGSRING**
HOUSING OF AN ELECTRIC MACHINE HAVING AN OPTIMIZED SEALING RING
CARTER D'UNE MACHINE ÉLECTRIQUE COMPORTANT UN ANNEAU D'ÉTANCHÉITÉ OPTIMISÉ

(30) Priorität: 26.04.2019 DE 102019206002
(43) Veröffentlichungstag der Anmeldung: 02.03.2022
(73) Patentinhaber: Robert Bosch GmbH, 70442 Stuttgart (DE)
(72) Erfinder: CARRILLO ESTUPINAN, Camilo Andres, 70563 Stuttgart (DE); GEISE, Stephan, 59602 Ruethen (DE); VUONG, Thieu Huy, 67657 Kaiserslautern (DE)
(86) Internationale Anmeldenummer: PCT/EP2020/059194
(87) Internationale Veröffentlichungsnummer: WO 2020/216588

(56) Entgegenhaltungen:
- EP-A1- 1 855 034
- WO-A1-2006/042832
- WO-A1-2014/106707
- US-A1- 2002 063 395

## Beschreibung

### Stand der Technik

Die vorliegende Erfindung betrifft ein Gehäuse einer elektrischen Maschine.

Außerdem betrifft die Erfindung eine elektrische Maschine umfassend ein solches Gehäuse. Das Gehäuse weist insbesondere einen optimierten Dichtungsring auf.

Aus dem Stand der Technik sind Statorgehäuse für elektrische Antriebseinheiten bekannt. Solche elektrischen Antriebseinheiten sind insbesondere elektrische Maschinen für Fahrzeuge. Statorgehäuse sind dabei insbesondere Gussmetallgehäuse, die mit einem Deckel verschlossen sind. Zur Abdichtung von Kühlmittelflüssen, die innerhalb des Gussmetallgehäuses und des Deckels verlaufen, müssen zwischen den Komponenten formstabile Dichtungen sehr präzise eingelegt werden.

In der Veröffentlichung WO2016/062440 A3 wird ein Strangpressprofilgehäuse mit mäanderförmig verlaufenden Kühlkanälen in der Gehäusewand beschrieben. Bei diesen Strangpressprofilgehäusen wird das Kühlmedium durch einen dreidimensionalen Kunststoffring mit speziellen Stegen umgelenkt. Da der Kunststoffring aus Polyamid gefertigt ist, nehmen die Stege das als Kühlmedium üblicherweise verwendete Wasser auf und quellen. Durch die daraus resultierende Volumenveränderung sowie Oberflächenveränderung gehen diese insbesondere eine Haftverbindung mit dem Gehäuse ein und können nicht wieder demontiert oder ausgetauscht werden. Ein weiteres Gehäuse einer elektrischen Maschine mit den Merkmalen des Oberbegriffs des Anspruchs 1 ist in WO2006/042832A1 offenbart. Eine Dichtung mit verschiedenen Dicken ist in US2002/063395A1 offenbart. EP1855034A1 und WO2014/106707A1 offenbaren weiteren Stand der Technik zu Dichtungen.

Für den formstabilen Kunststoffring muss aufgrund des direkten Kontakts mit dem Kühlmedium ein speziell hydrolysebeständiges Polyamid ausgewählt werden. Dies ist jedoch schwer zu verarbeiten und entsprechend teuer.

Auf der Oberseite des Kunststoffrings ist eine Dichtung in einem zusätzlichen Spritzgießprozess und Spritzgießwerkzeug angespritzt, die zum Deckel hin abdichtet. Ein Verrutschen dieser Dichtung kann zu Störungen und Partikeln im Kühlmediumstrom führen, wodurch die Gefahr von Kühlverlusten und damit einem Ausfall der Antriebseinheit besteht.

### Offenbarung der Erfindung

Die Erfindung ist definiert durch das Gehäuse mit den Merkmalen des Anspruchs 1. Das erfindungsgemäße Gehäuse einer elektrischen Maschine weist ein hohlzylinderförmiges Gehäuseelement auf. In dem Gehäuse ist ein Kühlkanal ausgeformt. Das hohlzylinderförmige Gehäuseelement ist bevorzugt ein Gehäusemantel und umfasst einzelne Kühlkanalabschnitte des Kühlkanals, die sich bezüglich einer Gehäuseachse radial in das Gehäuseelement erstrecken. Das holzylinderförmige Gehäuseelement ist bevorzugt rotationssymmetrisch zu der Gehäuseachse. Außerdem weist das Gehäuse zumindest einen Gehäusedeckel auf, der stirnseitig an dem Gehäuseelement angebracht ist. Das Gehäuseelement weist zumindest zwei verschiedene Kühlkanalabschnitte des Kühlkanals auf, die besonders vorteilhaft innerhalb des Gehäuseelements vollständig voneinander getrennt sind. Die Kühlkanalabschnitte erstrecken sich ausgehend von jeweils einer Kanalstirnöffnung einer Stirnfläche des Gehäuseelements in das Gehäuseelement hinein. An besagter Stirnfläche ist der Gehäusedeckel angebracht, wobei zwischen Gehäuseelement und Gehäusedeckel ringförmige Flachdichtung angeordnet ist.

Der Gehäusedeckel weist eine Ausnehmung auf, die als Umlenkabschnitt des Kühlkanals ausgebildet ist, um zwei, insbesondere benachbarte, Kanalstirnöffnungen und damit zwei Kühlkanalabschnitte strömungszuverbinden. Auf diese Weise verläuft der Kühlkanal, entlang dessen ein Kühlmedium strömt, ausgehend von einem der Kühlkanalabschnitte durch eine Durchgangsöffnung der Flachdichtung, durch den im Gehäusedeckel ausgebildeten Umlenkabschnitt, und durch eine weitere Durchgangsöffnung der Flachdichtung zu einem anderen Kühlkanalabschnitt. Insbesondere können die Flachdichtung und der im Gehäusedeckel ausgebildete Umlenkabschnitt, ermöglichen, dass der Kühlkanal von einem Kühlkanalabschnitt des Gehäuseelements zu einem benachbarten Kühlkanalabschnitt des Gehäuseelements verläuft. Auf diese Weise lässt sich eine Mäanderform des Kühlkanals realisieren.

Die Flachdichtung weist an der Stelle der Kanalstirnöffnungen besagte Durchgangsöffnungen auf. Außerdem weist die Flachdichtung eine Dichtanordnung zum Abdichten des Kühlkanals zwischen dem Gehäuseelement und dem Gehäusedeckel und einen Träger zum Halten der Dichtanordnung auf. Der Träger ist ringförmig ausgebildet. Dabei ist vorgesehen, dass die Dichtanordnung den Träger vollständig von entlang des Kühlkanals verlaufendem Fluid abschirmt. Dies bedeutet, dass die Dichtanordnung den Träger derart umschließt, dass der Träger gegenüber dem Kühlkanal des Gehäuses vollständig abgedichtet ist. Somit ist insbesondere verhinderbar, dass der Träger in Kontakt mit Kühlmedium gelangt und dadurch von dem Kühlmedium verändert wird, insbesondere aufquillt.

Der Träger wird vorteilhafterweise aus einem glasfasergefüllten Thermoplast gefertigt, der insbesondere in einem ersten Spritzgussschritt gefertigt wird. Bei der Dichtanordnung handelt es sich insbesondere um Flüssigsilikon (Liquid Silicone Rubber, LSR), das in einem nachgelagerten Spritzgussvorgang auf den Träger aufgespritzt wird. Somit kann die Dichtanordnung eine optimale Dichtwirkung zwischen Gehäuseelement und Gehäusedeckel sicherstellen, sodass einerseits ein Austreten von Kühlmedium verhindert ist, andererseits keine Störung des innerhalb des Kühlkanals strömenden Kühlmediums erfolgt. Bei dem Kühlmedium handelt es sich insbesondere um Wasser.

Da der Träger durch die Dichtanordnung vollständig von dem Kühlmedium abgedichtet ist, kann der Träger aus einem Material gefertigt werden, das kostengünstig ist und das nicht zwingend hydrolysebeständig sein muss. Dadurch kann ein einfach zu verarbeitender, kostengünstiger Kunststoff verwendet werden.

Die Unteransprüche haben bevorzugte Weiterbildungen der Erfindung zum Inhalt.

Der Träger weist einen Innenring und einen Außenring sowie Innenring und Außenring verbindende Stege auf. Dabei ist der Träger insbesondere einstückig ausgebildet. Zwischen Innenring, Außenring und Stegen verbleiben somit Durchgangsöffnungen, durch die Kühlmedium strömen kann. Die Stege erlauben vorteilhafterweise einen Übergang zwischen zwei Kühlkanalabschnitte. Außerdem ist durch die Durchgangsöffnungen insbesondere ein Übergang zwischen Kühlkanalabschnitte des Gehäuseelements und Ausnehmungen des Gehäusedeckels ermöglicht. Insbesondere kann Fluid aus einem Kühlkanalabschnitt in eine Ausnehmung des Gehäusedeckels austreten und durch die Ausnehmung zu einem benachbarten Kühlkanalabschnitt gelangen. Auf diese Weise ist der zuvor beschriebene mäanderförmige Kühlkanal einfach und aufwandsarm realisierbar. Durch die Verwendung des Trägers lässt sich die Geometrie der Flachdichtung einfach und aufwandsarm festlegen. Insbesondere ist der Träger aus einem einfach zu verarbeitenden Material gefertigt, sodass die Geometrie der Flachdichtung einfach und aufwandsarm, dabei insbesondere kostengünstig, festgelegt werden kann.

Besonders vorteilhaft ist vorgesehen, dass der Innenring und der Außenring C-förmig oder klammerförmig von der Dichtanordnung umgeben sind. Dadurch steht der Innenring radial nach innen gegenüber der Dichtanordnung hervor oder schließt bündig mit dieser ab. Der Außenring steht gegenüber der Dichtanordnung radial nach außen hervor oder schließt bündig mit dieser ab. Da an diesen Stellen keinerlei Kühlmedium vorhanden ist, ist der Träger vollständig von dem Kühlmedium abgedichtet. Durch die C-Form der Dichtanordnung ist ein verbesserter mechanischer Halt der Dichtanordnung am Träger durch Formschluss erreicht. Somit ist insbesondere die Gefahr eines Verrutschens der Dichtanordnung verringert, wodurch insbesondere die Gefahr einer Störung des Flusses des Kühlmediums vermindert ist. Somit ermöglicht das Gehäuse eine optimale Kühlung einer sich darin befindlichen elektrischen Maschine und damit einen sicheren und zuverlässigen Betrieb der elektrischen Maschine.

Die Stege sind bevorzugt vollständig von der Dichtanordnung umgeben. Da die Stege insbesondere zum Abgrenzen benachbarter Kühlkanalabschnitte dienen, sind die Stege vollständig dem Kühlmedium ausgesetzt. Durch das vollständige Umgeben mit der Dichtanordnung ist somit sichergestellt, dass der Träger vollständig von dem Kühlmedium abgedichtet ist.

Bevorzugt umschließt die Dichtanordnung den Innenring und den Außenring im Querschnitt gesehen jeweils von einer der beiden Stirnseiten des Trägers ausgehend über einen dem Kühlkanal zugewandten Innenumgang zur anderen Stirnseite des Trägers klammerförmig oder C-förmig. Dabei erfolgt besonders vorteilhaft das zuvor beschriebene vollständige umschließen der Stege durch die Dichtanordnung. Somit ist einerseits die Dichtanordnung zuverlässig an dem Träger fixiert, andererseits ist der Träger gegenüber dem Kühlkanal abgedichtet. Ein Kontakt von Kühlmedium und Träger ist damit vermieden.

Weiterhin weist die Dichtanordnung über dem Innenring und/oder über dem Außenring eine erste Schichtdicke auf.

Über den Stegen weist die Dichtanordnung entweder ebenfalls die erste Schichtdicke oder alternativ eine zweite Schichtdicke auf, wobei die zweite Schichtdicke kleiner ist als die erste Schichtdicke. Somit ist eine erste Gruppe von Stegen vorhanden, die die Dichtanordnung mit der ersten Schichtdicke aufweisen, während eine zweite Gruppe der Stege die Dichtanordnung mit der zweiten Schichtdicke aufweist, Insbesondere ist vorgesehen, dass sich sämtliche Stege entweder der ersten Gruppe oder der zweiten Gruppe zuordnen lassen. Die erste Gruppe der Stege ermöglicht somit ein vollständiges Abdichten benachbarter Kühlkanalabschnitte. Insbesondere kann über die Stege aufgrund der Dichtanordnung, das dort mit derselben Schichtdicke wie über dem Außenring und dem Innenring vorhanden ist, keinerlei Fluid fließen. Da der Außenring und der Innenring zur vollständigen Abdichtung zwischen Gehäuseelement und Gehäusedeckel vorgesehen sind, führt die mit derselben ersten Schichtdicke über den Stegen der ersten Gruppe angebrachte Dichtanordnung ebenfalls zu einer vollständigen Abdichtung zwischen Gehäuseelement und Gehäusedeckel. Dahingegen ermöglichen die Stege der zweiten Gruppe, die die Dichtanordnung mit der geringeren zweiten Schichtdicke aufweisen, eine Verbindung zwischen benachbarten Kühlkanalabschnitte. Aufgrund der geringeren zweiten Schichtdicke kann hier die Dichtanordnung nicht vollständig zwischen Gehäuseelement und Gehäusedeckel abdichten. Somit ist ein Übergang zwischen benachbarten Kühlkanalabschnitte ermöglicht, wodurch die oben beschriebene Mäanderform des Kühlkanals erreicht wird. An den Stegen der zweiten Gruppe dient die Dichtanordnung somit lediglich zum Abschirmen des Trägers von dem Kühlmedium. In einer alternativen Ausgestaltung kann die Dichtanordnung eine einheitliche Schichtdicke aufweisen, sodass nicht die erste Gruppe von Stegen von der zweiten Gruppe von Stegen wie oben beschrieben unterschieden wird.

In einer besonders bevorzugten Ausführungsform bildet die Dichtanordnung an den Stegen der ersten Gruppe eine Dichtfläche zum Abdichten benachbarter Kühlkanalabschnitte. An den Stegen der zweiten Gruppe bildet die Dichtanordnung eine Verbindungsfläche zum Verbinden benachbarter Kühlkanalabschnitte. Somit können durch entsprechende Wahl von Stegen der ersten Gruppe und Stegen der zweiten Gruppe Kühlkanäle erstellt werden, die sich mäanderförmig durch das gesamte Gehäuse der elektrischen Maschine ziehen, was bedeutet, dass insbesondere benachbarte Kühlkanalabschnitte innerhalb des Gehäuseelements gegenläufig durchströmt werden.

Der Träger weist vorteilhafterweise eine konstante Wanddicke auf. Dadurch ist der Träger einfach und kostengünstig herstellbar. Die Wanddicke ist insbesondere die Abmessung des Trägers entlang der Mittelachse der Ringform der Flachdichtung.

Der Träger ist vorteilhafterweise zumindest teilweise mit der Dichtanordnung umspritzt. Insbesondere ist der Träger ein Spritzgussteil, das in einem nachgelagerten Spritzvorgang mit der Dichtanordnung umspritzt wird. Somit ist ein einfaches und aufwandsarmes Fertigen der Flachdichtung ermöglicht.

Der Träger ist bevorzugt aus einem thermoplastischen Material gefertigt, das insbesondere fasergefüllt ist. Insbesondere ist der Träger aus einem thermoplastischen Kunststoff hergestellt. Dieser ist einfach und kostengünstig zu verarbeiten, wodurch der Träger einfach und aufwandsarm hergestellt werden kann.

Die Dichtanordnung ist bevorzugt aus einem Elastomer gefertigt. Somit kann die Dichtanordnung optimal eine Dichtfunktion übernehmen. Das Elastomer ist vorteilhafterweise beständig gegenüber dem verwendeten Kühlmedium, das insbesondere Wasser sein kann.

Bevorzugt weist der Träger zumindest einen Zentrierstift auf. Besonders vorteilhaft sind mehrere Zentrierstifte an dem Träger vorhanden. Durch den zumindest einen Zentrierstift ist ermöglicht, die Flachdichtung an dem Gehäuseelement und/oder dem Gehäusedeckel zu zentrieren. Sind mehrere Zentrierstifte vorhanden, die besonders vorteilhaft symmetrisch angeordnet sind, so ist lediglich eine einzige Orientierung der Flachdichtung bei Montage der Flachdichtung ermöglicht. Auf diese Weise ist insbesondere verhindert, dass die Flachdichtung falsch an dem Gehäuseelement und/oder dem Gehäusedeckel montiert wird.

Durch die Verwendung des Trägers ist eine hohe Formstabilität der Flachdichtung gegeben. Insbesondere ist ein Verzug der Flachdichtung minimiert. Gleichzeitig ist die Dichtwirkung der Flachdichtung optimiert.

Die Erfindung betrifft bevorzugt außerdem eine elektrische Maschine. Diese umfasst einen Rotor, einen Stator, und ein Gehäuse wie zuvor beschrieben. Dabei ist vorgesehen, dass der Stator an dem hohlzylinderförmigen Gehäuseelement des Gehäuses angebracht ist.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Ansicht einer elektrischen Maschine gemäß einem Ausführungsbeispiel der Erfindung,
- Figur 2: eine schematische Explosionsdarstellung eines Teilbereichs der elektrischen Maschine,
- Figur 3: eine schematische Detailansicht eines Gehäuseelements der elektrischen Maschine gemäß dem Ausführungsbeispiel der Erfindung mit einer Flachdichtung,
- Figur 4: eine schematische Schnittansicht des Gehäuseelements der elektrischen Maschine gemäß dem Ausführungsbeispiel der Erfindung mit der Flachdichtung,
- Figur 5: eine schematische Detailansicht der Flachdichtung der elektrischen Maschine gemäß dem Ausführungsbeispiel der Erfindung,
- Figur 6: eine weitere schematische Detailansicht der Flachdichtung der elektrischen Maschine gemäß dem Ausführungsbeispiel der Erfindung, und
- Figur 7: eine nochmals weitere schematische Darstellung der Flachdichtung der elektrischen Maschine gemäß dem Ausführungsbeispiel der Erfindung.

### Ausführungsformen der Erfindung

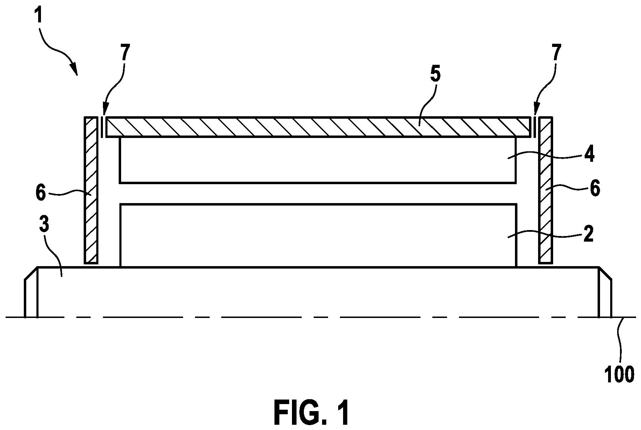

Figur 1 zeigt schematisch eine elektrische Maschine 1 gemäß einem Ausführungsbeispiel der Erfindung. Die elektrische Maschine 1 umfasst eine Rotorwelle 3, auf der ein Rotor 2 angebracht ist. Die Rotorwelle 3 erstreckt sich entlang einer Gehäuseachse 100 eines Gehäuses der elektrischen Maschine 1. Außerdem umfasst die elektrische Maschine 1 ein Gehäuseelement 5, das hohlzylinderförmig ausgebildet ist und einen Stator 4 trägt. Durch den Stator 4 ist der Rotor 2 antreibbar, sodass die Rotorwelle 3 rotierbar ist. Insbesondere stellt die Gehäuseachse 100 eine Mittelachse des Gehäuseelements 5 dar.

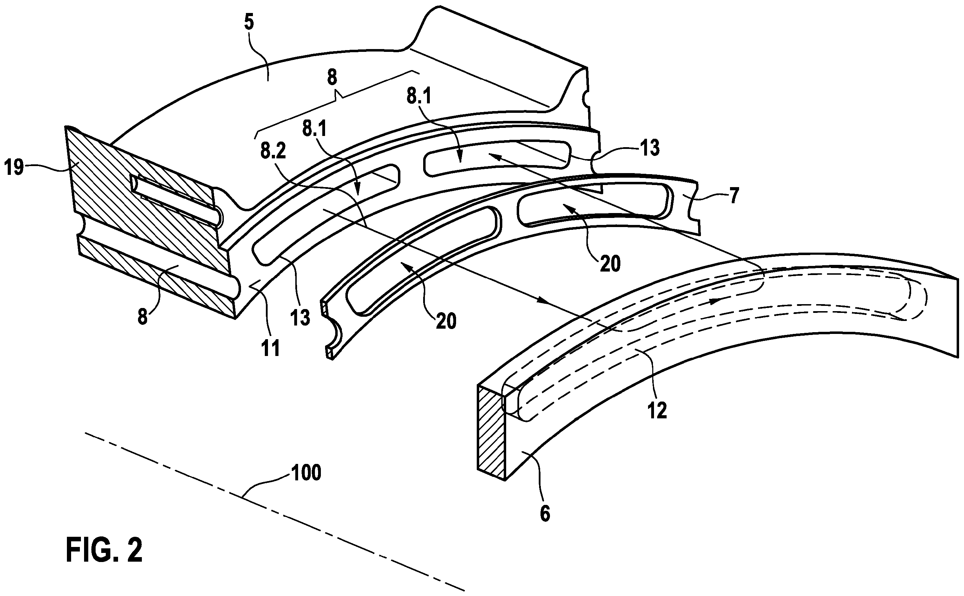

Das Gehäuse weist zumindest einen, an einer Stirnseite 7 des Gehäuseelement 5 angebrachten, Gehäusedeckel 6 auf. Zwischen Gehäusedeckel 6 und dem Gehäuseelement 5 ist eine Flachdichtung 7 angebracht. Das Zusammenspiel von Gehäuseelement 5, Gehäusedeckel 6 und Flachdichtung 7 wird nachfolgend mit Bezug auf die Figuren 2 bis 7 näher erläutert.

Figur 2 zeigt eine schematische Explosionsdarstellung eines Teilbereichs des Gehäuses der elektrischen Maschine 1, wobei lediglich das Gehäuseelement 5, der Gehäusedeckel 6 und die Flachdichtung 7 schematisch dargestellt sind. Als Referenz ist außerdem dieselbe Gehäuseachse 100 der Rotorwelle 3 wie in Figur 1 eingezeichnet. In dem Gehäuse ist ein Kühlkanal 8 ausgebildet.

In dem schematischen Beispiel der Figur 2 weist der Kühlkanal 8 zwei Kühlkanalabschnitte 8.1 auf, wobei die Kühlkanalabschnitte 8.1 durch einen in einer Ausnehmung 12 des Gehäusedeckels 6 realisierten Umlenkabschnitt 8.2 des Kühlkanals 8 verbunden sind, um somit einen mäanderförmigen Kühlkanal 8 zu etablieren. Dazu ist vorgesehen, dass eine Stirnfläche 11 des Gehäuseelements 5 zwei Kanalstirnöffnungen 13 aufweist, wobei sich ausgehend von jeder Kanalstirnöffnung 13 ein Kühlkanalabschnitt 8.1 bezüglich der Gehäuseachse 100 axial durch das Gehäuseelement 5 erstreckt. Die durch die Ausnehmung 12 des Gehäusedeckels 6 realisierte Umlenkabschnitt 8.2 ist derart ausgebildet, dass sich dieser über die beiden Kanalstirnöffnungen 13 erstreckt. Die Flachdichtung 7 ist zwischen der Stirnfläche 11 und dem Gehäusedeckel 6 angebracht und dient zur Abdichtung zwischen Gehäusedeckel 6 und Gehäuseelement 5. An den zu den Kanalstirnöffnungen 13 korrespondierenden Stellen der Flachdichtung 7 sind Durchgangsöffnungen 20 vorgesehen, um einen ungehinderten Fluidfluss durch den Kühlkanal 8 zu ermöglichen. Durch die Flachdichtung 7 ist verhindert, dass Kühlmedium, das entlang des Kühlkanals 8 strömt, aus der Anordnung von Gehäuseelement 5 und Gehäusedeckel 6 austreten kann. Gleichzeitig darf die Flachdichtung 7 den Kühlkanal 8 nicht negativ beeinflussen.

Um das Gehäuseelement 5 mit dem Gehäusedeckel 6 zu verbinden, sind insbesondere Gehäuserippen 19 vorhanden. Diese weisen bevorzugt ein Gewinde auf, das zur Schraubverbindung von Gehäuseelement 5 und Gehäusedeckel 6 dienen kann.

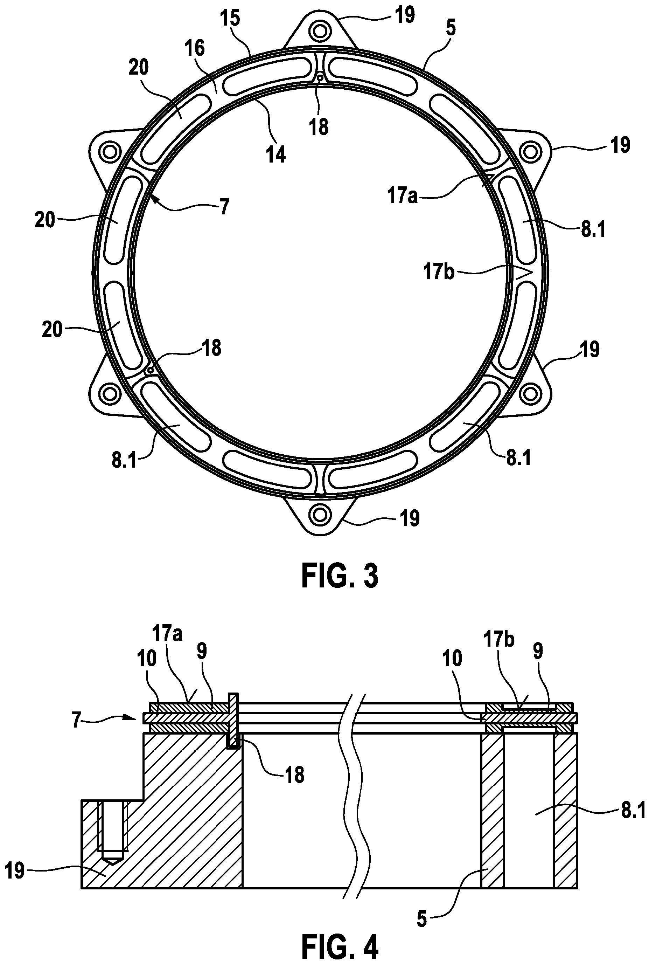

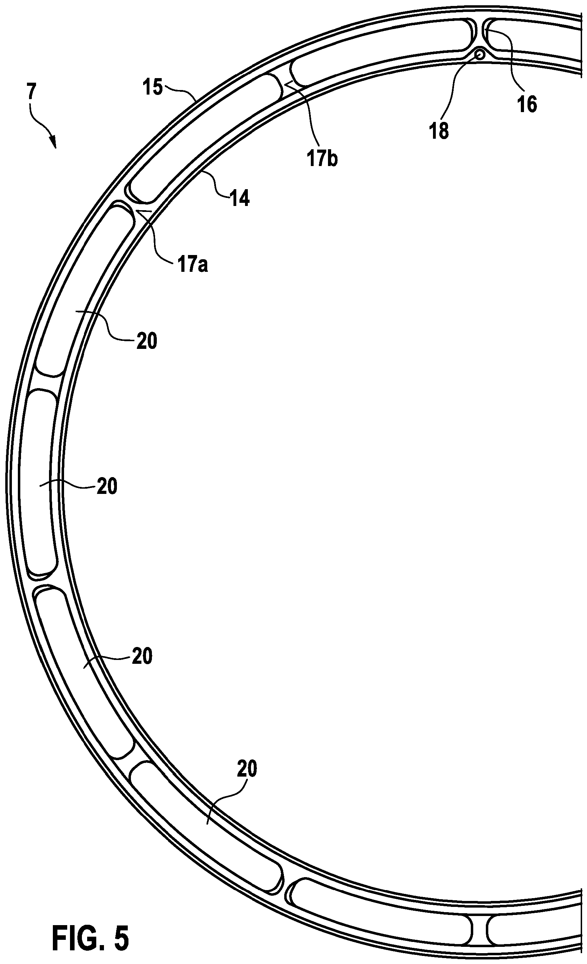

Die Figuren 3 und 4 zeigen das Gehäuseelement 5 mit angebrachter Flachdichtung 7. Dabei ist vorgesehen, dass die Flachdichtung 7 einen Innenring 14, einen Außenring 15 sowie zwischen Innenring 14 und Außenring 15 verbindende Stege 16 vorhanden sind. Um, wie in Figur 2 gezeigt, jeweils zwei benachbarte Kühlkanalabschnitte 8.1 zu verbinden, weist die Flachdichtung 7 zwei unterschiedliche Gruppen von Stegen 16 auf. Stege einer ersten Gruppe sind mit Dichtflächen 17a zum Abdichten zwischen Gehäuseelement 5 und Gehäusedeckel 6 ausgebildet. Stege 16 einer zweiten Gruppe sind mit Verbindungsflächen 17b zum Verbinden zweier benachbarter Kühlkanalabschnitte 8.1 versehen. Sämtliche Stege 16 lassen sich entweder der ersten Gruppe oder der zweiten Gruppe zuordnen. Figur 5 zeigt insbesondere die Ausgestaltung der Stege 16 der ersten Gruppe und der zweiten Gruppe im Detail.

Um eine eindeutige Festlegung der Flachdichtung 7 relativ zu dem Gehäuseelement 5 und dem Gehäusedeckel 6 zu erreichen, sind an dem Innenring 14 zumindest zwei Zentrierstifte 18 angebracht. Diese Zentrierstifte 18 sind nicht-symmetrisch an dem Innenring 14 angeordnet, sodass die Flachdichtung 7 lediglich in einer einzigen Ausrichtung an dem Gehäuseelement 5 angeordnet werden kann. Somit ist eine fehlerhafte Montage der Flachdichtung 7 verhindert.

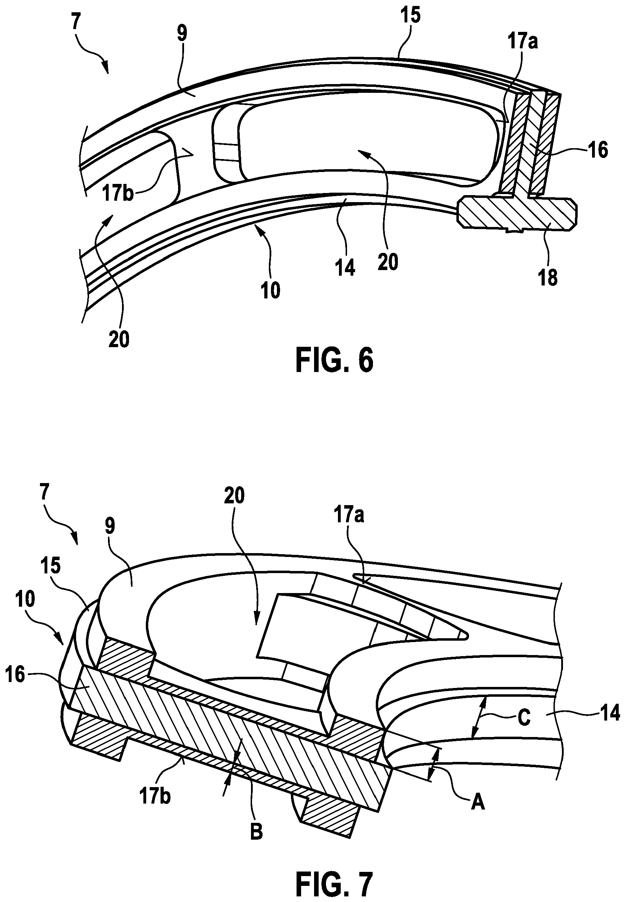

Die Figuren 4, 6 und 7 werden nachfolgend gemeinsam beschrieben. Insbesondere ist aus diesen Figuren erkennbar, wie die Stege 16 der ersten Gruppe und die Stege 16 der zweiten Gruppe unterschiedlich ausgebildet sind, um einerseits die Dichtfläche 17a, andererseits die Verbindungsfläche 17b zu bilden. Wie insbesondere aus den Figuren 6 und 7 hervorgeht, ist die Flachdichtung 7 zweiteilig ausgebildet. An einem Träger 10 ist eine Dichtanordnung 9 angebracht, wobei der Träger 10 zum Definieren der Form der Flachdichtung 7 dient, während die Dichtanordnung 9 die Abdichtfunktion übernimmt. Der Träger 10 weist somit den Innenring 14 und den Außenring 15 sowie die verbindenden Stege 16 auf, wobei der Träger 10 einstückig ausgebildet ist. Der Träger 10 kann beispielsweise aus einem fasergefüllten thermoplastischen Kunststoff hergestellt werden und seine Form durch Spritzguss erhalten. Eine Wanddicke des Trägers 10 ist bevorzugt konstant und entspricht der in Figur 14 dargestellten Wanddicke C.

Damit der Träger 10 aus einem einfach zu verarbeitenden und kostengünstigen Material hergestellt werden kann, ist vorteilhaft, wenn keine hydrolysebeständigen Materialien zu verwenden sind. Dies bedingt, dass der Träger 10 nicht in Kontakt mit dem entlang des Kühlkanals 8 fließenden Kühlmedium gelangen darf. Somit schirmt die Dichtanordnung 9 den Träger 10 vollständig von dem Kühlmedium ab. Dazu umgreift die Dichtanordnung 9 den Innenring 14 und den Außenring 15 C-förmig und die Stege 16 vollständig. Somit ragt der Außenring 15 radial nach außen aus der Dichtanordnung 9 hervor, während der Innenring 14 radial nach innen aus der Dichtanordnung 9 hervorragt. An dieser Stelle ist jedoch kein Kühlmedium vorhanden, sodass ein Kontakt zwischen Kühlmedium und Träger 10 ausgeschlossen ist. Durch das Hervorragen des Trägers 10 aus der Dichtanordnung 9 ist ermöglicht, dass eine Fixierung der Flachdichtung 7 an dem Gehäuseelement 5 und/oder dem Gehäusedeckel 6 über den Träger 10 erfolgen kann, sodass eine formstabile und bewegungsarme Fixierung der Flachdichtung 7 erfolgen kann. Damit ist insbesondere verhindert, dass eine Störung des Kühlkanals 8 durch Verrutschen der Flachdichtung 7 erfolgen kann.

Bei der Dichtanordnung 9 handelt es sich insbesondere um ein Elastomer, beispielsweise um Flüssigsilikon (Liquid Silicone Rubber, LSR). Dieses Material lässt sich vorteilhafterweise auf den Träger 10 aufspritzen, sodass die Flachdichtung 7 einfach und aufwandsarm durch ein zweiphasiges Spritzgussverfahren hergestellt werden kann.

Um den zuvor beschriebenen Vorteil der wahlweisen Abdichtung zweier benachbarter Kühlkanalabschnitte 8.1 durch die Dichtfläche 17a und die Verbindung zweier benachbarter Kühlkanalabschnitte 8.1 durch die Verbindungsfläche 17b zu erreichen, ist vorgesehen, dass an den Stegen 16 die Dichtanordnung 9 unterschiedliche Schichtdicken aufweist. Während die Dichtanordnung 9 sowohl am Innenring 14 als auch am Außenring 15 eine konstante erste Schichtdicke A aufweist, ist die Schichtdicke der Dichtanordnung 9 an den Stegen 9 wahlweise entweder die erste Schichtdicke A oder eine zweite Schichtdicke B, die geringer als die erste Schichtdicke A ist.

Insbesondere ist an Stegen 16 der ersten Gruppe die Dichtanordnung 9 mit der ersten Schichtdicke A vorhanden, während an Stegen 16 der zweiten Gruppe die Dichtanordnung 9 mit der zweiten Schichtdicke B vorhanden ist. Dadurch ist an den Stegen 16 der ersten Gruppe die Dichtanordnung 9 mit derselben ersten Schichtdicke A vorhanden, wie auch an dem Innenring 14 und Außenring 15. Da an dem Innenring 14 und an dem Außenring 15 eine vollständige Abdichtung gegenüber dem Gehäuseelement 5 und dem Gehäusedeckel 6 erfolgen muss, erfolgt somit durch die erste Schichtdicke A an den Stegen 16 der ersten Gruppe ebenfalls ein vollständiges Abdichten, wodurch die Dichtfläche 17a generiert ist. Dies bedeutet, dass über die Stege 16 der ersten Gruppe, die die Dichtfläche 17a aufweisen, kein Kühlmedium strömen kann. Vielmehr sind benachbarte Kühlkanalabschnitte 8.1 vollständig getrennt. Dahingegen ist an den Stegen 16 der zweiten Gruppe aufgrund der Dichtanordnung 9 mit der zweiten Schichtdicke B die Verbindungsfläche 17b gebildet, da hier die Dichtanordnung 9 aufgrund der gegenüber dem Bereich des Innenrings 14 und Außenrings 15 reduzierten Schichtdicke keine Abdichtwirkung erzielen kann. Somit kann Kühlmedium über die Stege 16 der zweiten Gruppe fließen, wodurch die Verbindungsfläche 17b realisiert ist, die eine Verbindung zwischen benachbarten Kühlkanalabschnitten 8.1 ermöglicht. In einer alternativen Ausgestaltung kann daher auf die Ausnehmungen 12 des Gehäusedeckels 6 verzichtet werden.

Unabhängig von der ersten Schichtdicke A und der zweiten Schichtdicke B ist für alle Stege 16 sichergestellt, dass diese vollständig mit der Dichtanordnung 9 umgeben sind. Somit ist in jedem Fall erreicht, dass die Stege 16 und damit der gesamte Träger 10 von dem Kühlmedium durch die Dichtanordnung 9 abgedichtet sind. Damit ist verhindert, dass Kühlmedium in Kontakt mit dem Träger 10 gelangen kann, wodurch ein Quellen des Trägers 10 verhindert ist. Die Flachdichtung 7 ist damit sehr formstabil und langlebig.

Die Flachdichtung 7 kann insbesondere in elektrischen Maschinen eingesetzt werden, die als Fahrzeugantrieb verwendet werden. Dabei kann es sich insbesondere um fremderregte Synchronmaschinen handeln.

## Patentansprüche

1. Gehäuse einer elektrischen Maschine (1) umfassend ein hohlzylinderförmiges Gehäuseelement (5), insbesondere Gehäusemantel, sowie zumindest einen Gehäusedeckel (6), der stirnseitig an dem Gehäuseelement (5) angebracht ist,
wobei im Gehäuse ein Kühlkanal (8) ausgebildet ist,
wobei das Gehäuseelement (5) zumindest zwei Kühlkanalabschnitte (8.1) des Kühlkanals (8) aufweist, die sich ausgehend von jeweils einer Kanalstirnöffnung (13) in einer Stirnfläche (11) des Gehäuseelements (5) in axialer Richtung bezüglich einer Gehäuseachse (100) in das Gehäuseelement (5) erstrecken,
wobei zwei benachbarte Kühlkanalabschnitte (8.1) jeweils über einen im Gehäusedeckel (6) ausgebildeten Umlenkabschnitt (8.2) miteinander strömungsverbunden sind,
wobei zwischen dem Gehäuseelement (5) und dem Gehäusedeckel (6) eine Flachdichtung (7) zur Abdichtung des Kühlkanals (8) angeordnet ist, wobei die Flachdichtung (7) im Bereich der Kanalstirnöffnungen (13) Durchgangsöffnungen (20) zum Durchleiten des Kühlkanals in den Gehäusedeckel (6) aufweist, und
wobei die Flachdichtung (7) einen ringförmigen Träger (10) und eine auf dem Träger angeordnete Dichtanordnung (9) aufweist,
**dadurch gekennzeichnet, dass**
- die Dichtanordnung (9) den Träger (10) derart umschließt, dass der Träger (10) gegenüber dem Kühlkanal (8) des Gehäuses vollständig abgedichtet ist,
- der Träger (10) einen Innenring (14) und einen Außenring (15) sowie Innenring (14) und Außenring (15) verbindende Stege (16) aufweist, wobei der Innenring (14), der Außenring (15) und die Stege (16) bevorzugt einstückig ausgebildet sind,
- die Dichtanordnung (9) über dem Innenring (14) und/oder über dem Außenring (15) eine erste Schichtdicke (A) aufweist, wobei die Dichtanordnung (9) über einer ersten Gruppe der Stege (16) die erste Schichtdicke (A) und über einer zweiten Gruppe der Stege (16) eine zweite Schichtdicke (B) aufweist, wobei die zweite Schichtdicke (B) kleiner als die erste Schichtdicke (A) ist,
- die Dichtanordnung (9) an den Stegen (16) der ersten Gruppe eine Dichtfläche (17a) zum Abdichten benachbarter Kühlkanalabschnitte (8.1) und an den Stegen (16) der zweiten Gruppe eine Verbindungsfläche (17b) zum Verbinden benachbarter Kühlkanalabschnitte (8.1) bildet.

2. Gehäuse nach Anspruch 1, **dadurch gekennzeichnet, dass** der Innenring (14) und der Außenring (15) jeweils C-förmig oder klammerförmig von der Dichtanordnung (9) umgeben sind, sodass der Innenring (14) radial nach innen und der Außenring (15) radial nach außen aus der Dichtanordnung (9) hervorstehen oder bündig mit der Dichtanordnung (9) abschließen.

3. Gehäuse nach Anspruch 1 oder 2, **dadurch gekennzeichnet, dass** die Stege (16) vollständig von der Dichtanordnung (9) umgeben sind.

4. Gehäuse nach einem der Ansprüche 1 bis 3, **dadurch gekennzeichnet, dass** die Dichtanordnung (9) den Innenring (14) und den Außenring (15) im Querschnitt gesehen jeweils von einer der beiden Stirnseiten des Trägers (10) ausgehend über einen dem Kühlkanal (8) zugewandten Innenumgang zur anderen Stirnseite des Trägers (10) klammerförmig oder C-förmig umschließt.

5. Gehäuse nach einem der vorhergehenden Ansprüche, **dadurch gekennzeichnet, dass** der Träger (10) eine konstante Wanddicke (C) aufweist.

6. Gehäuse nach einem der vorhergehenden Ansprüche, **dadurch gekennzeichnet, dass** der Träger (10) zumindest teilweise mit der Dichtanordnung (9) umspritzt ist.

7. Gehäuse nach einem der vorhergehenden Ansprüche, **dadurch gekennzeichnet, dass** der Träger (10) aus einem, insbesondere fasergefülltem, thermoplastischen Material, insbesondere einem thermoplastischen Kunststoff, hergestellt ist.

8. Gehäuse nach einem der vorhergehenden Ansprüche, **dadurch gekennzeichnet, dass** die Dichtanordnung (9) aus einem Elastomer gefertigt ist.

9. Gehäuse nach einem der vorhergehenden Ansprüche, **dadurch gekennzeichnet, dass** der Träger (10) zumindest einen, insbesondere mehrere, Zentrierstifte (18) aufweist, um die Flachdichtung (7) an dem Gehäuseelement (5) und/oder dem Gehäusedeckel (6) zu zentrieren.

10. Elektrische Maschine (1) umfassend einen Rotor (2), einen Stator (4), und ein Gehäuse nach einem der vorhergehenden Ansprüche, wobei der Stator (4) an dem hohlzylinderförmigen Gehäuseelement (5) des Gehäuses angebracht ist.

## Claims

1. Housing of an electric machine (1), comprising a hollow cylindrical housing element (5), in particular a housing jacket, and at least one housing cover (6) attached to an end of the housing element (5),
wherein a cooling channel (8) is formed in the housing, wherein the housing element (5) has at least two cooling channel sections (8.1) of the cooling channel (8), which cooling channel sections (8.1), starting from a respective channel end opening (13) in an end face (11) of the housing element (5), extend into the housing element (5) in an axial direction relative to a housing axis (100),
wherein two adjacent cooling channel sections (8.1) are fluidically connected to each other via a deflection section (8.2) formed in the housing cover (6),
wherein a gasket (7) for sealing off the cooling channel (8) is arranged between the housing element (5) and the housing cover (6), wherein the gasket (7) has through-openings (20), in the region of the channel end openings (13), for directing the cooling channel into the housing cover (6), and
wherein the gasket (7) has a ring-shaped support (10) and a sealing assembly (9) arranged on the support,
**characterized in that**
- the sealing assembly (9) encloses the support (10) in such a way that the support (10) is completely sealed off from the cooling channel (8) of the housing,
- the support (10) has an inner ring (14) and an outer ring (15), and also webs (16) connecting inner ring (14) and outer ring (15), wherein the inner ring (14), the outer ring (15) and the webs (16) are preferably formed in one piece,
- the sealing assembly (9) has a first layer thickness (A) over the inner ring (14) and/or over the outer ring (15), wherein the sealing assembly (9) has the first layer thickness (A) over a first group of the webs (16) and a second layer thickness (B) over a second group of the webs (16), wherein the second layer thickness (B) is smaller than the first layer thickness (A),
- the sealing assembly (9) forms, on the webs (16) of the first group, a sealing surface (17a) for sealing off adjacent cooling channel sections (8.1), and forms, on the webs (16) of the second group, a connection surface (17b) for connecting adjacent cooling channel sections (8.1) .

2. Housing according to Claim 1, **characterized in that** the inner ring (14) and the outer ring (15) are each surrounded by the sealing assembly (9) in a C-shape or clip shape, such that the inner ring (14) projects radially inwards and the outer ring (15) projects radially outwards from the sealing assembly (9), or they end flush with the sealing assembly (9).

3. Housing according to Claim 1 or 2, **characterized in that** the webs (16) are completely surrounded by the sealing assembly (9).

4. Housing according to one of Claims 1 to 3, **characterized in that** the sealing assembly (9) encloses the inner ring (14) and the outer ring (15) in a clip shape or C-shape, seen in cross section from one of the two ends of the support (10), via an inner circumference facing the cooling channel (8), to the other end of the support (10).

5. Housing according to one of the preceding claims, **characterized in that** the support (10) has a constant wall thickness (C).

6. Housing according to one of the preceding claims, **characterized in that** the support (10) is encapsulated, at least in part, with the sealing assembly (9).

7. Housing according to one of the preceding claims, **characterized in that** the support (10) is produced from a thermoplastic material, in particular a fibre-filled thermoplastic.

8. Housing according to one of the preceding claims, **characterized in that** the sealing assembly (9) is produced from an elastomer.

9. Housing according to one of the preceding claims, **characterized in that** the support (10) has at least one centring pin (18), in particular multiple centring pins (18), in order to centre the gasket (7) on the housing element (5) and/or on the housing cover (6).

10. Electric machine (1) comprising a rotor (2), a stator (4), and a housing according to one of the preceding claims, wherein the stator (4) is attached to the hollow cylindrical housing element (5) of the housing.

## Revendications

1. Boîtier d'une machine électrique (1) comprenant un élément de boîtier (5) en forme de cylindre creux, notamment une enveloppe de boîtier, ainsi qu'au moins un couvercle de boîtier (6) qui est monté du côté frontal sur l'élément de boîtier (5),
un canal de refroidissement (8) étant réalisé dans le boîtier,
l'élément de boîtier (5) présentant au moins deux sections de canal de refroidissement (8.1) du canal de refroidissement (8), qui s'étendent dans l'élément de boîtier (5) en direction axiale par rapport à un axe de boîtier (100) en partant respectivement d'une ouverture frontale de canal (13) dans une face frontale (11) de l'élément de boîtier (5),
deux sections de canal de refroidissement (8.1) voisines étant respectivement reliées fluidiquement entre elles par le biais d'une section de déviation (8.2) réalisée dans le couvercle de boîtier (6),
un joint plat (7) étant agencé entre l'élément de boîtier (5) et le couvercle de boîtier (6) pour assurer l'étanchéité du canal de refroidissement (8), le joint plat (7) présentant dans la zone des ouvertures frontales de canal (13) des ouvertures de passage (20) pour faire passer le canal de refroidissement dans le couvercle de boîtier (6), et
le joint plat (7) présentant un support annulaire (10) et un agencement d'étanchéité (9) agencé sur le support, **caractérisé en ce que**
- l'agencement d'étanchéité (9) entoure le support (10) de telle sorte que le support (10) est complètement étanchéifié par rapport au canal de refroidissement (8) du boîtier,
- le support (10) présente une bague intérieure (14) et une bague extérieure (15) ainsi que des entretoises (16) reliant la bague intérieure (14) et la bague extérieure (15), la bague intérieure (14), la bague extérieure (15) et les entretoises (16) étant de préférence réalisées d'une seule pièce,
- l'agencement d'étanchéité (9) présente une première épaisseur de couche (A) sur la bague intérieure (14) et/ou sur la bague extérieure (15), l'agencement d'étanchéité (9) présentant la première épaisseur de couche (A) sur un premier groupe des entretoises (16) et une deuxième épaisseur de couche (B) sur un deuxième groupe des entretoises (16), la deuxième épaisseur de couche (B) étant inférieure à la première épaisseur de couche (A),
- l'agencement d'étanchéité (9) forme sur les entretoises (16) du premier groupe une surface d'étanchéité (17a) pour étanchéifier des sections de canal de refroidissement (8.1) voisines et sur les entretoises (16) du deuxième groupe une surface de liaison (17b) pour relier des sections de canal de refroidissement (8.1) voisines.

2. Boîtier selon la revendication 1, **caractérisé en ce que** la bague intérieure (14) et la bague extérieure (15) sont entourées chacune en forme de C ou en forme de pince par l'agencement d'étanchéité (9), de telle sorte que la bague intérieure (14) dépasse radialement vers l'intérieur et la bague extérieure (15) dépasse radialement vers l'extérieur de l'agencement d'étanchéité (9) ou se terminent à fleur de l'agencement d'étanchéité (9).

3. Boîtier selon la revendication 1 ou 2, **caractérisé en ce que** les entretoises (16) sont entièrement entourées par l'agencement d'étanchéité (9).

4. Boîtier selon l'une quelconque des revendications 1 à 3, **caractérisé en ce que** l'agencement d'étanchéité (9) entoure la bague intérieure (14) et la bague extérieure (15), vues en coupe transversale, respectivement en partant de l'un des deux côtés frontaux du support (10) par le biais d'une périphérie intérieure tournée vers le canal de refroidissement (8) vers l'autre côté frontal du support (10), en forme de pince ou en forme de C.

5. Boîtier selon l'une quelconque des revendications précédentes, **caractérisé en ce que** le support (10) présente une épaisseur de paroi constante (C).

6. Boîtier selon l'une quelconque des revendications précédentes, **caractérisé en ce que** le support (10) est au moins partiellement surmoulé avec l'agencement d'étanchéité (9).

7. Boîtier selon l'une quelconque des revendications précédentes, **caractérisé en ce que** le support (10) est fabriqué en un matériau thermoplastique, notamment chargé de fibres, notamment en une matière plastique thermoplastique.

8. Boîtier selon l'une quelconque des revendications précédentes, **caractérisé en ce que** l'agencement d'étanchéité (9) est fabriqué en un élastomère.

9. Boîtier selon l'une quelconque des revendications précédentes, **caractérisé en ce que** le support (10) présente au moins une, notamment plusieurs, goupilles de centrage (18) pour centrer le joint plat (7) sur l'élément de boîtier (5) et/ou le couvercle de boîtier (6) .

10. Machine électrique (1) comprenant un rotor (2), un stator (4), et un boîtier selon l'une quelconque des revendications précédentes, dans laquelle le stator (4) est monté sur l'élément de boîtier en forme de cylindre creux (5) du boîtier.
